# EUROPEAN PATENT APPLICATION

(11) **EP 4 632 957 A1**
(43) Date of publication of application: **15.10.2025**
(21) Application number: 25169391.7
(22) Date of filing: 09.04.2025
(51) Int. Cl.: H01R 11/28, H01R 13/707, H01R 13/621, H01R 13/641

(54) **CONNECTOR AND CONNECTOR ASSEMBLY**

(30) Priority: 12.04.2024 CN 202410446517
(71) Applicant: Tyco Electronics (Shanghai) Co., Ltd., Pilot Free Trade Zone Shanghai 200131 (CN)
(72) Inventor: Feng, Qi, Shanghai, 200233 (CN); Li, Ziwei, Shanghai, 200233 (CN); Yang, Yuchen, Shanghai, 200233 (CN)
(74) Representative: Grünecker Patent- und Rechtsanwälte PartG mbB

(57) **Abstract**

The present invention discloses a connector and a connector assembly. The connector comprises: a housing (11) which is suitable for mating with a mating housing (21) of a mating connector (2); a high-voltage module (12) which is provided in the housing (11) and is suitable for being fastened to a high-voltage mating module (22) of the mating connector (2) to be electrically connected with the high-voltage mating module (22); and a low-voltage module (13) which is movably installed outside the housing (11), for electrical connection to a low-voltage mating module (23) of the mating connector (2). The low-voltage module (13) can be moved between a pre installation position separated from the low-voltage mating module (23) and a final installation position electrically connected to the low-voltage mating module (23), the low-voltage module (13) is moved separately to the final installation position electrically connected to the low-voltage mating module (23) only after the high-voltage module (12) has been fastened to the high-voltage mating module (22). Therefore, the present invention can accurately determine whether the high-voltage module has been fastened to the high-voltage mating module based on the electrical connection status between the low-voltage module and the low-voltage mating module, thereby improving the safety of connector use.

## Description

### CROSS-REFERENCE TO RELATED APPLICATION

This application claims the benefit of Chinese Patent Application No. CN202410446517.7 filed on April 12, 2024 in the State Intellectual Property Office of China, the whole disclosure of which is incorporated herein by reference.

### BACKGROUND OF THE INVENTION

### Field of the Invention

The present invention relates to a connector and a connector assembly comprising the connector.

### Description of the Related Art

In the prior art, a high-voltage connector typically includes a housing and high-voltage and low-voltage modules arranged within the housing. The high-voltage module is suitable for being fastened to the high-voltage mating module in the high-voltage mating connector to be electrically connected with the high-voltage mating module. The low-voltage module is used to electrically connect with the low-voltage mating module in the high-voltage mating connector. In the prior art, in order to prevent arcing when the high-voltage module is electrically connected to the high-voltage mating module, it is necessary to supply power to the high-voltage module and the high-voltage mating module only after the high-voltage module has been fastened to the high-voltage mating module.

In the prior art, it is usually determined whether the high-voltage module has been fastened to the high-voltage mating module based on the electrical connection status between the low-voltage module and the low-voltage mating module. When the low-voltage module and the low-voltage mating module are in an electrically separated state, it is determined that the high-voltage module has not been fastened to the high-voltage mating module; When the low-voltage module is electrically connected to the low-voltage mating module, it is determined that the high-voltage module has been fastened to the high-voltage mating module. However, in the prior art, the high-voltage module and low-voltage module are moved synchronously. During the process of fastening the high-voltage module and high-voltage mating module, the low-voltage module will also be synchronously moved to the position of electrical connection with the low-voltage mating module. Therefore, it is difficult to accurately determine whether the high-voltage module has been fastened to the high-voltage mating module based on the electrical connection status between the low-voltage module and the low-voltage mating module, which can easily lead to misjudgment and affect the safety of connector use.

### SUMMARY OF THE INVENTION

The present invention has been made to overcome or alleviate at least one aspect of the above mentioned disadvantages.

According to an aspect of the present invention, there is provided a connector. The connector comprises: a housing which is suitable for mating with a mating housing of a mating connector; a high-voltage module which is provided in the housing and is suitable for being fastened to a high-voltage mating module of the mating connector to be electrically connected with the high-voltage mating module; and a low-voltage module which is movably installed outside the housing, for electrical connection to a low-voltage mating module of the mating connector. The low-voltage module can be moved between a pre installation position separated from the low-voltage mating module and a final installation position electrically connected to the low-voltage mating module. The low-voltage module is moved separately to the final installation position electrically connected to the low-voltage mating module only after the high-voltage module has been fastened to the high-voltage mating module.

According to an exemplary embodiment of the present invention, the low-voltage module comprises: a movable shell which is movably installed outside the housing and can be moved between the pre installation position and the final installation position; and a low-voltage terminal which is fixed to the movable shell and is suitable for mating with a low-voltage mating terminal of the low-voltage mating module. When the high-voltage module has been fastened to the high-voltage mating module and the movable shell has been moved to the final installation position, the low-voltage terminal is mated with the low-voltage mating terminal to electrically connect the low-voltage module and the low-voltage mating module.

According to another exemplary embodiment of the present invention, the low-voltage module further comprises a connecting bolt which is rotatably connected to the movable shell and can be rotated relative to the movable shell, the connecting bolt is used for threaded connection with a threaded hole in a fixed shell of the low-voltage mating module, to drive the movable shell to move from the pre installation position to the final installation position and lock the movable shell in the final installation position.

According to another exemplary embodiment of the present invention, the connecting bolt has a flange part located at its head, and a slot is formed in the movable shell, the flange part of the connecting bolt is rotatably engaged in the slot, so that the connecting bolt can be rotated around its axis and cannot be separated from the movable shell in its axial direction.

According to another exemplary embodiment of the present invention, an operating hole communicated with the slot is formed in the movable shell, allowing an operating tool to be inserted into the slot through the operating hole and engaged with the head of the connecting bolt.

According to another exemplary embodiment of the present invention, the movable shell comprises a pair of cylindrical parts adapted to be respectively inserted into a pair of insertion holes in the fixed shell for positioning the movable shell onto the fixed shell.

According to another exemplary embodiment of the present invention, a guide slot is defined between the pair of cylindrical parts, and a guide wall is formed on the outside of the housing, the guide wall is mated with the guide slot to guide the movable shell to move along the axial direction of the connecting bolt.

According to another exemplary embodiment of the present invention, a through hole is formed in the guide wall to allow the connecting bolt to pass through, and the connecting bolt passes through the through hole in the guide wall.

According to another exemplary embodiment of the present invention, the low-voltage terminal is provided in one cylindrical part of the movable shell, suitable for mating with the low-voltage mating terminal inserted into the one cylindrical part.

According to another exemplary embodiment of the present invention, the high-voltage module comprises: a high-voltage cable, one end of which extends into the housing; a high-voltage terminal which is provided in the housing and electrically connected to one end of the high-voltage cable; and a high-voltage fastener which is used to fasten the high-voltage terminal to a high-voltage mating terminal of the mating connector, to electrically connect the high-voltage module and the high-voltage mating module.

According to another exemplary embodiment of the present invention, the high-voltage fastener is suitable for being threaded to the high-voltage mating terminal or a nut inside the mating connector to fasten the high-voltage terminal and the high-voltage mating terminal together; the connecting bolt is threaded to the fixed shell of the low-voltage mating module after the high-voltage fastener has been threaded to the high-voltage mating terminal or the nut inside the mating connector.

According to another aspect of the present invention, there is provided a connector assembly. The connector assembly comprises: the above connector; and a mating connector which is mated with the connector.

According to an exemplary embodiment of the present invention, the mating connector comprises: a mating housing which is mated with the housing of the connector; a high-voltage mating module which is provided in the mating housing for electrically connecting to the high-voltage module of the connector; and a low-voltage mating module which is fixedly provided outside the mating housing for electrical connection to the low-voltage module of the connector. The low-voltage module of the connector is separately moved to the final installation position electrically connected to the low-voltage mating module after the high-voltage module has been fastened to the high-voltage mating module.

According to another exemplary embodiment of the present invention, the low-voltage mating module comprises: a fixed shell that is integrally formed with the mating shell or fixed to the outside of the mating shell; an insulation retaining body which is fixedly installed in the fixed shell; and a low-voltage mating terminal is fixedly provided in the insulation retaining body. The low-voltage mating terminal is used to mate with the low-voltage terminal of the low-voltage module to electrically connect the low-voltage module and the low-voltage mating module.

According to another exemplary embodiment of the present invention, a threaded hole is formed in the fixed shell of the low-voltage mating module and is used for threaded connection with the connecting bolt of the low-voltage module.

According to another exemplary embodiment of the present invention, a pair of insertion holes are formed in the fixed shell of the low-voltage mating module, and a pair of cylindrical parts on the movable shell of the low-voltage module are adapted to be respectively inserted into the pair of insertion holes for positioning the movable shell onto the fixed shell.

According to another exemplary embodiment of the present invention, the threaded hole in the fixed shell is located between the pair of insertion holes, and the insulation retaining body is inserted into one insertion hole of the fixed shell; the insulation retaining body and the low-voltage mating terminal are adapted to be inserted into one cylindrical part of the movable shell to mate with the low-voltage terminal in the one cylindrical part.

According to another exemplary embodiment of the present invention, the low-voltage mating module further comprises a sealing ring which is fitted onto the insulation retaining body and adapted to be radially compressed between the insulation retaining body and the inner wall of a cylindrical part of the movable shell to achieve sealing between the two.

According to another exemplary embodiment of the present invention, the low-voltage mating module further comprises a low-voltage cable which is connected to the low-voltage mating terminal and led out from the fixed shell for electrical connection to a low-voltage detection circuit.

According to another exemplary embodiment of the present invention, the low-voltage mating module comprises two low-voltage mating terminals and two low-voltage cables, with one ends of the two low-voltage cables connected to the two low-voltage mating terminals respectively; the low-voltage terminal of the low-voltage module comprises two pins, which are adapted to be respectively plugged into the two low-voltage mating terminals to electrically connect the two low-voltage mating terminals.

According to another exemplary embodiment of the present invention, the mating housing comprises a flange located on its exterior, which is used for installation onto an installation panel, the fixed shell of the low-voltage mating module is integrally formed on or fixed to the flange.

According to another exemplary embodiment of the present invention, the high-voltage mating module comprises a high-voltage mating terminal, in which a threaded connection hole is formed; the high-voltage fastener passes through one end of the high-voltage cable and the high-voltage terminal and is threaded into the threaded connection hole of the high-voltage mating terminal to fasten the high-voltage terminal and the high-voltage mating terminal together.

According to another exemplary embodiment of the present invention, the high-voltage mating module comprises a high-voltage mating terminal and a nut fixed to the high-voltage mating terminal; the high-voltage fastener passes through one end of the high-voltage cable, the high-voltage terminal, and the high-voltage mating terminal and is threaded with the nut to fasten the high-voltage terminal and the high-voltage mating terminal together.

In the aforementioned exemplary embodiments according to the present invention, the low-voltage module and high-voltage module of the connector are two separate modules, and the low-voltage module is separately moved to the final installation position electrically connected to the low-voltage mating module after the high-voltage module has been fastened to the high-voltage mating module. Therefore, the present invention can accurately determine whether the high-voltage module has been fastened to the high-voltage mating module based on the electrical connection status between the low-voltage module and the low-voltage mating module, thereby effectively avoiding misjudgment and improving the safety of connector use.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative exploded view of a connector assembly according to an exemplary embodiment of the present invention, wherein the connector and the mating connector are in a separated state from each other;
Figure 2 shows a cross-sectional view of a connector assembly according to an exemplary embodiment of the present invention, wherein the connector and the mating connector are in a separated state from each other;
Figure 3 shows a cross-sectional view of a connector assembly according to an exemplary embodiment of the present invention, wherein the housing of the connector and the mating housing of the mating connector are mated and the high-voltage fastener has not yet been threaded to the high-voltage mating terminal;
Figure 4 shows a cross-sectional view of a connector assembly according to an exemplary embodiment of the present invention, wherein the high-voltage fastener has been threaded to the high-voltage mating terminal;
Figure 5 shows an illustrative perspective view of a connector assembly according to an exemplary embodiment of the present invention, wherein the high voltage module has been fastened to the mating high voltage module and the low-voltage module is in a pre installation position electrically separated from the low voltage mating module;
Figure 6 shows a cross-sectional view of a connector assembly according to an exemplary embodiment of the present invention, wherein the high voltage module has been fastened to the mating high voltage module and the low-voltage module is in a pre installation position electrically separated from the low voltage mating module;
Figure 7 shows a cross-sectional view of a connector according to an exemplary embodiment of the present invention, in which the low-voltage module is separated from the housing of the connector;
Figure 8 shows an illustrative perspective view of a low-voltage module of a connector according to an exemplary embodiment of the present invention;
Figure 9 shows an illustrative exploded view of the low-voltage module of a connector according to an exemplary embodiment of the present invention;
Figure 10 shows a cross-sectional view of a low-voltage module of a connector according to an exemplary embodiment of the present invention;
Figure 11 shows a cross-sectional view of a low-voltage mating module of a mating connector according to an exemplary embodiment of the present invention;
Figure 12 shows an illustrative perspective view of a low-voltage mating module of a mating connector according to an exemplary embodiment of the present invention; and
Figure 13 shows a cross-sectional view of a low-voltage module and a low-voltage mating module of a connector assembly according to an exemplary embodiment of the present invention, wherein the low-voltage module is in the final installation position electrically connected to the low-voltage mating module.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a connector. The connector comprises: a housing which is suitable for mating with a mating housing of a mating connector; a high-voltage module which is provided in the housing and is suitable for being fastened to a high-voltage mating module of the mating connector to be electrically connected with the high-voltage mating module; and a low-voltage module which is movably installed outside the housing, for electrical connection to a low-voltage mating module of the mating connector. The low-voltage module can be moved between a pre installation position separated from the low-voltage mating module and a final installation position electrically connected to the low-voltage mating module. The low-voltage module is moved separately to the final installation position electrically connected to the low-voltage mating module only after the high-voltage module has been fastened to the high-voltage mating module.

According to another general concept of the present invention, there is provided a connector assembly. The connector assembly comprises: the above connector; and a mating connector which is mated with the connector.

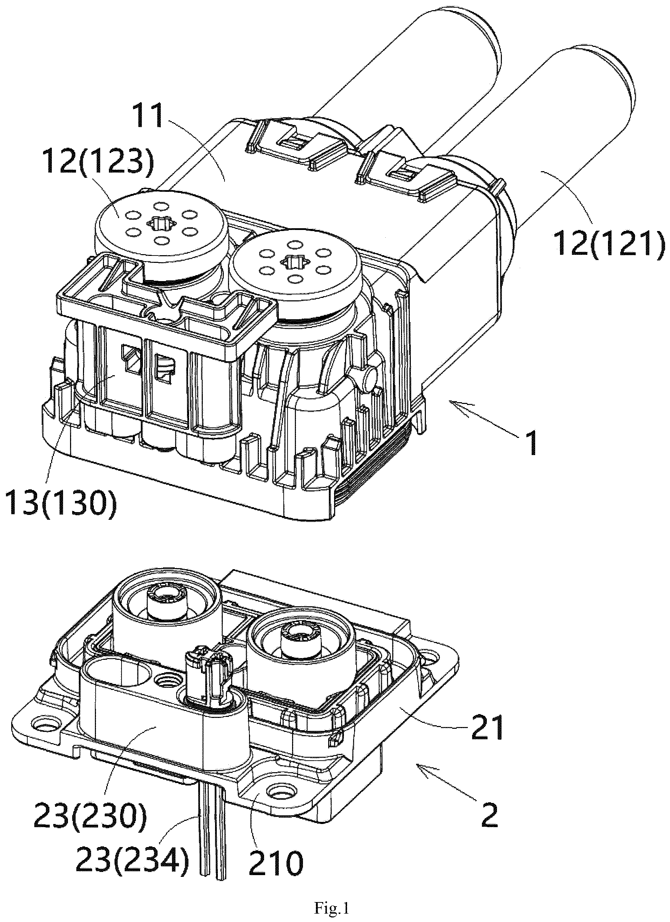

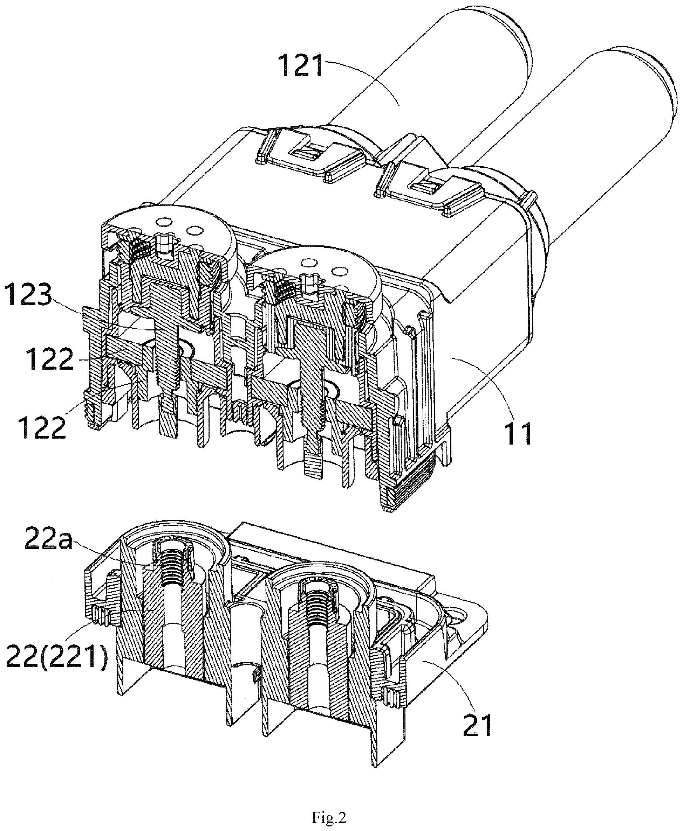

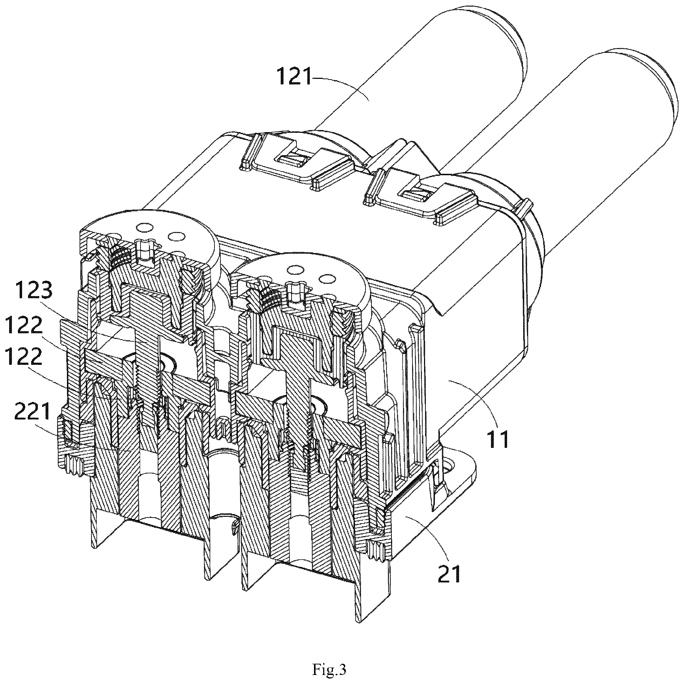

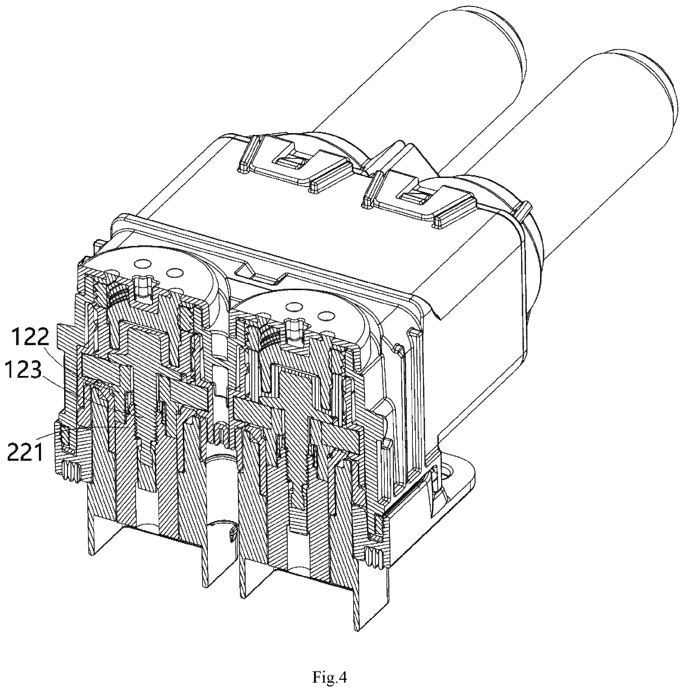

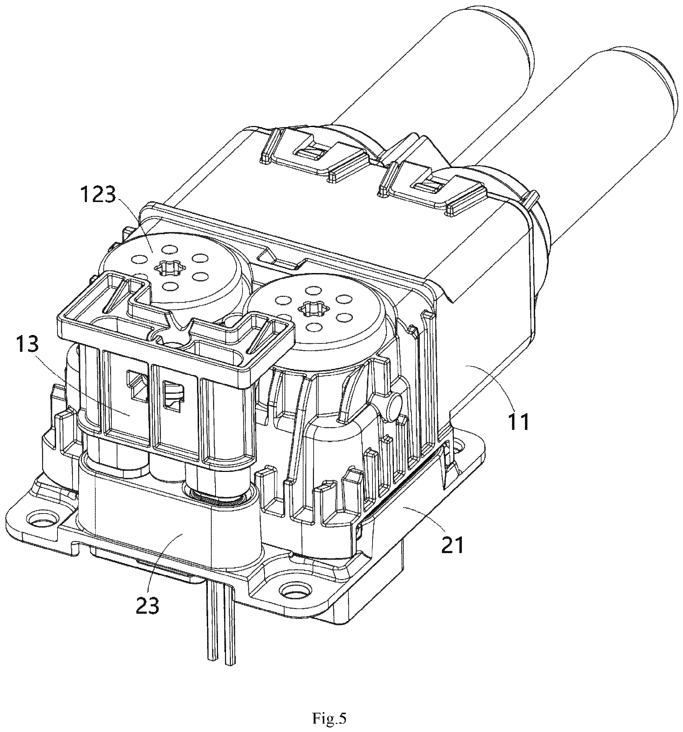

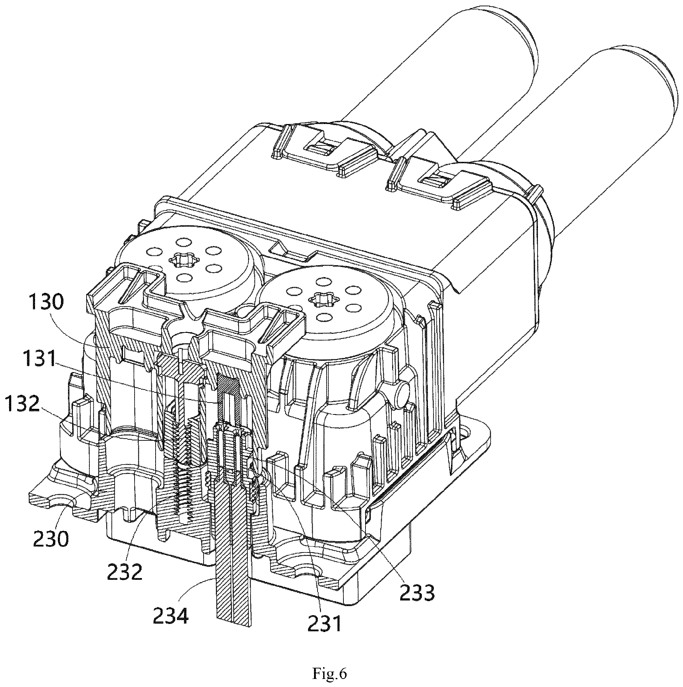

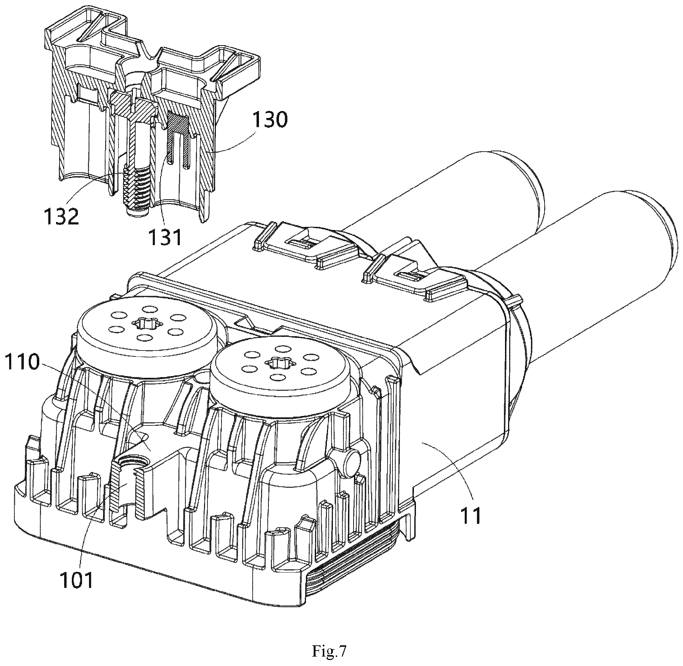

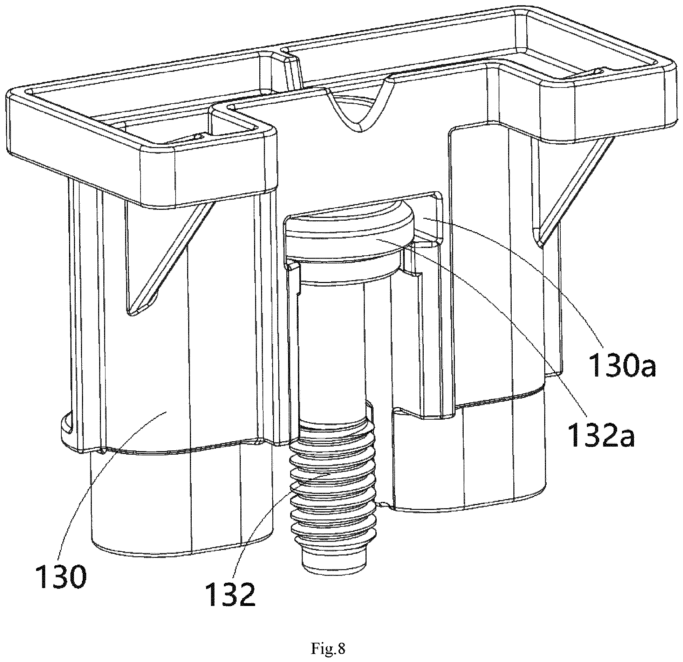

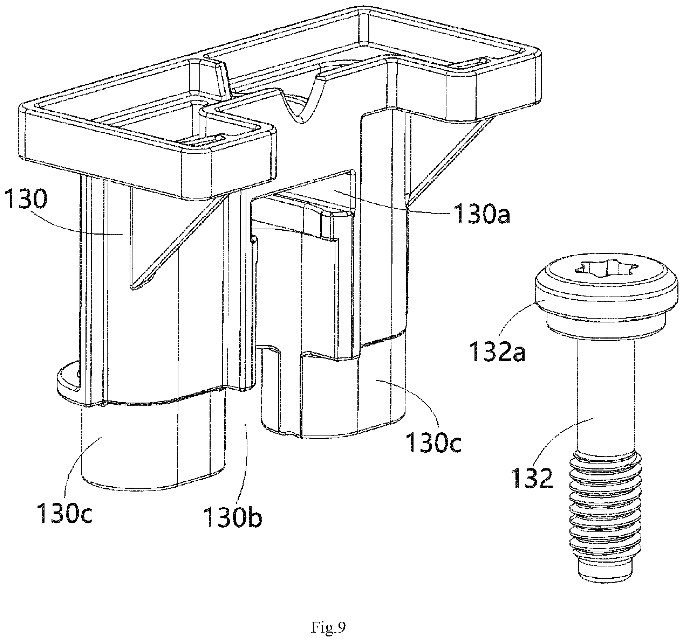

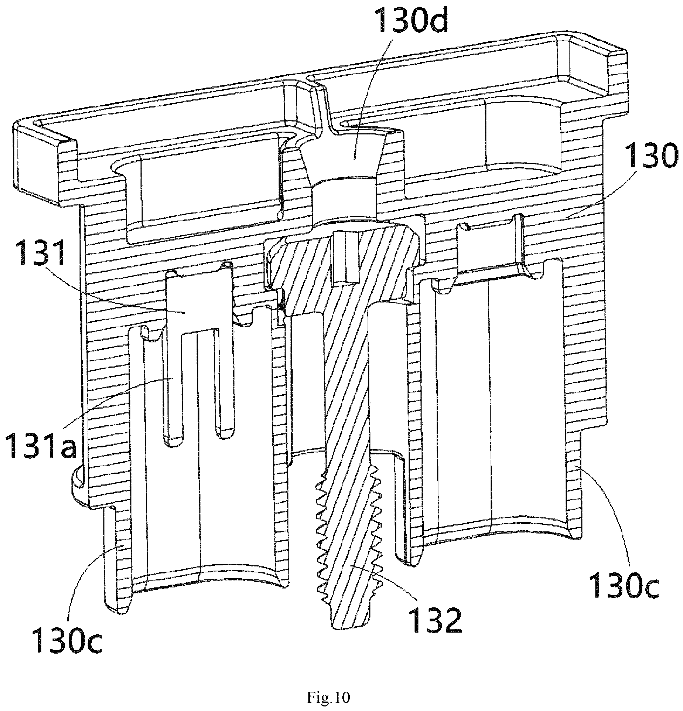

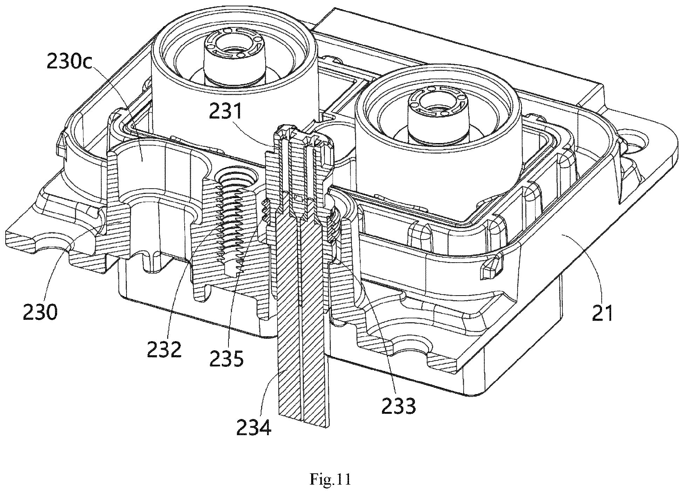

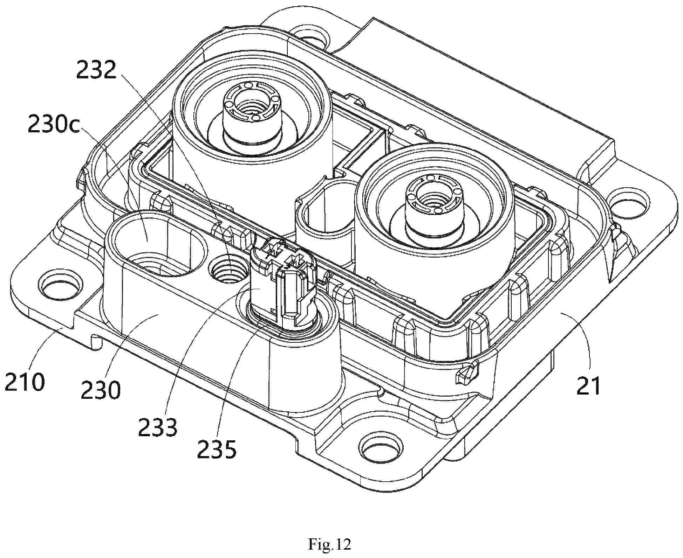

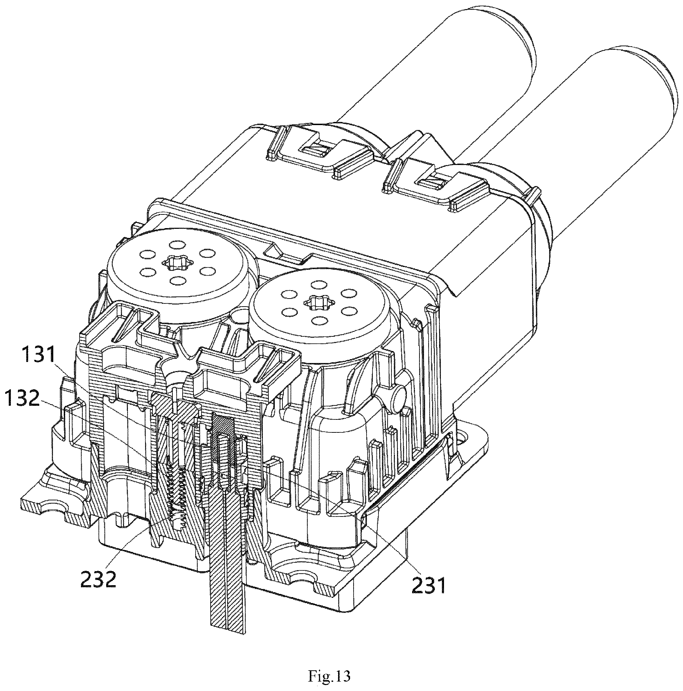

Figure 1 shows an illustrative exploded view of a connector assembly according to an exemplary embodiment of the present invention, wherein connector 1 and mating connector 2 are in a separated state from each other; Figure 2 shows a cross-sectional view of a connector assembly according to an exemplary embodiment of the present invention, wherein connector 1 and mating connector 2 are in a separated state from each other; Figure 3 shows a cross-sectional view of a connector assembly according to an exemplary embodiment of the present invention, wherein the housing 11 of connector 1 and the mating housing 21 of mating connector 2 are mated and the high-voltage fastener 123 has not yet been threaded to the high-voltage mating terminal 221; Figure 4 shows a cross-sectional view of a connector assembly according to an exemplary embodiment of the present invention, wherein the high-voltage fastener 123 has been threaded to the high-voltage mating terminal 221; Figure 5 shows an illustrative perspective view of a connector assembly according to an exemplary embodiment of the present invention, in which the high voltage module 12 has been fastened to the mating high voltage module 22 and the low-voltage module 13 is in a pre installation position electrically separated from the low voltage mating module 23; Figure 6 shows a cross-sectional view of a connector assembly according to an exemplary embodiment of the present invention, wherein the high voltage module 12 has been fastened to the mating high voltage module 22 and the low-voltage module 13 is in a pre installation position electrically separated from the low voltage mating module 23; Figure 7 shows a cross-sectional view of a connector according to an exemplary embodiment of the present invention, in which the low-voltage module 13 is separated from the housing 11 of the connector 1; Figure 8 shows an illustrative perspective view of the low-voltage module 13 of connector 1 according to an exemplary embodiment of the present invention; Figure 9 shows an illustrative exploded view of the low-voltage module 13 of connector 1 according to an exemplary embodiment of the present invention; Figure 10 shows a cross-sectional view of the low-voltage module 13 of connector 1 according to an exemplary embodiment of the present invention; Figure 11 shows a cross-sectional view of the low-voltage mating module 23 of the mating connector 2 according to an exemplary embodiment of the present invention; Figure 12 shows an illustrative perspective view of the low-voltage mating module 23 of the mating connector 2 according to an exemplary embodiment of the present invention; Figure 13 shows a cross-sectional view of the low-voltage module 13 and the low-voltage mating module 23 of the connector assembly according to an exemplary embodiment of the present invention, where the low-voltage module 13 is in the final installation position electrically connected to the low-voltage mating module 23.

As shown in Figures 1 to 13, in an exemplary embodiment of the present invention, a connector 1 is disclosed, which includes a housing 11, a high-voltage module 12, and a low-voltage module 13. The housing 11 of connector 1 is suitable for mating with a mating housing 21 of mating connector 2. The high-voltage module 12 is installed in the housing 11 and is suitable for being fastened to a high-voltage mating module 22 of the mating connector 2 to be electrically connected with the high-voltage mating module 22. The low-voltage module 13 is fixedly installed outside the housing 11 for electrical connection to a low-voltage mating module 23 of the mating connector 2.

As shown in Figures 1 to 13, in the illustrated embodiment, the low-voltage module 13 can be moved between a pre installation position separated from the low-voltage mating module 23 and a final installation position electrically connected to the low-voltage mating module 23. After the high-voltage module 12 has been fastened to the high-voltage mating module 22, the low-voltage module 13 is separately moved to the final installation position that is electrically connected to the low-voltage mating module 23.

As shown in Figures 1 to 13, in the illustrated embodiment, the low-voltage module 13 and high-voltage module 12 of connector 1 are two separate modules. The low-voltage module 13 is moved separately to the final installation position electrically connected to the low-voltage mating module 23 only after the high-voltage module 12 has been fastened to the high-voltage mating module 22. Therefore, the present invention can accurately determine whether the high-voltage module 12 has been fastened to the high-voltage mating module 22 based on the electrical connection status between the low-voltage module 13 and the low-voltage mating module 23, thereby effectively avoiding misjudgment and improving the safety of connector 1.

As shown in Figures 1 to 13, in the illustrated embodiment, the low-voltage module 13 includes a movable shell 130 and a low-voltage terminal 131. The movable shell 130 is installed on the outside of the housing 11 in a movable manner, and can be moved between the pre installation position and the final installation position. The low-voltage terminal 131 is fixed to the movable shell 130 and is suitable for mating with the low-voltage mating terminal 231 of the low-voltage mating module 23. When the high-voltage module 12 has been fastened to the high-voltage mating module 22 and the movable shell 130 has been moved to the final installation position, the low-voltage terminal 131 is mated with the low-voltage mating terminal 231 to electrically connect the low-voltage module 13 and the low-voltage mating module 23.

As shown in Figures 1 to 13, in the illustrated embodiment, the low-voltage module 13 also includes a connecting bolt 132. The connecting bolt 132 is rotatably connected to the movable shell 130 and can be rotated relative to the movable shell 130. The connecting bolt 132 is used for threaded connection with the threaded hole 232 in the fixed shell 230 of the low-voltage mating module 23, to drive the movable shell 130 from the pre installation position to the final installation position and lock the movable shell 130 in the final installation position.

As shown in Figures 1 to 13, in the illustrated embodiment, the connecting bolt 132 has a flange part 132a located at its head. A slot 130a is formed in the movable shell 130. The flange part 132a of the connecting bolt 132 is rotatably engaged in the slot 130a, so that the connecting bolt 132 can be rotated around its axis and cannot be separated from the movable shell 130 in its axial direction.

As shown in Figures 1 to 13, in the illustrated embodiment, an operating hole 130d communicated with the slot 130a is formed in the movable shell 130, allowing an operating tool (not shown) to be inserted into the slot 130a through the operating hole 130d and engaged with the head of the connecting bolt 132. In this way, the connecting bolt 132 can be tightened or loosened by operating the tool.

As shown in Figures 1 to 13, in the illustrated embodiment, the movable shell 130 includes a pair of cylindrical parts 130c, which are adapted to be respectively inserted into a pair of insertion holes 230c in the fixed shell 230 for positioning the movable shell 130 on the fixed shell 230.

As shown in Figures 1 to 13, in the illustrated embodiment, a guide slot 130b is defined between the pair of cylindrical parts 130c, and a guide wall 110 is formed on the outside of the housing 11. The guide wall 110 is mated with the guide slot 130b to guide the movement of the movable shell 130 along the axial direction of the connecting bolt 132.

As shown in Figures 1 to 13, in the illustrated embodiment, a through hole 101 is formed in the guide wall 110 to allow the connecting bolt 132 to pass through, and the connecting bolt 132 passes through the through hole 101 in the guide wall 110.

As shown in Figures 1 to 13, in the illustrated embodiment, the low-voltage terminal 131 is provided in one cylindrical part 130c of the movable shell 130, suitable for mating with the low-voltage mating terminal 231 inserted into the one cylindrical part 130c.

As shown in Figures 1 to 13, in the illustrated embodiment, the high-voltage module 12 includes a high-voltage cable 121, a high-voltage terminal 122, and a high-voltage fastener 123. One end of the high-voltage cable 121 extends into the housing 11. The high-voltage terminal 122 is installed in the housing 11 and electrically connected to one end of the high-voltage cable 121. For example, the high-voltage terminal 122 can be riveted, crimped, or welded to one end of the high-voltage cable 121. High voltage fastener 123 is used to fasten the high voltage terminal 122 to the high voltage mating terminal 221 of mating connector 2, to electrically connect the high voltage module 12 and the high voltage mating module 22.

As shown in Figures 1 to 13, in the illustrated embodiment, the high-voltage fastener 123 is adapted to be threaded to the high-voltage mating terminal 221 to fasten the high-voltage terminal 122 and the high-voltage mating terminal 221 together. The connecting bolt 132 is threaded to the fixed shell 230 of the low-voltage mating module 23 after the high-voltage fastener 123 has been threaded to the high-voltage mating terminal 221.

Please note that the present invention is not limited to the illustrated embodiment. For example, the high-voltage fastener 123 may be threaded onto a nut (not shown) inside the mating connector 2 to fasten the high-voltage terminal 122 and the high-voltage mating terminal 221 together. The connecting bolt 132 is threaded to the fixed shell 230 of the low-voltage mating module 23 after the high-voltage fastener 123 has been threaded to the nut inside the mating connector 2.

As shown in Figures 1 to 13, in another exemplary embodiment of the present invention, a connector assembly is also disclosed. The connector assembly includes the aforementioned connector 1 and a mating connector 2, which is mated with the connector 1.

As shown in Figures 1 to 13, in the illustrated embodiment, the mating connector 2 includes a mating housing 21, a high-voltage mating module 22, and a low-voltage mating module 23. The mating housing 21 of the mating connector 2 is mated with the housing 11 of the connector 1. The high-voltage mating module 22 is installed in the mating housing 21 for electrical connection to the high-voltage module 12 of the connector 1. The low-voltage mating module 23 is fixedly installed outside the mating housing 21 for electrical connection to the low-voltage module 13 of the connector 1. The low-voltage module 13 of connector 1 is separately moved to the final installation position electrically connected to the low-voltage mating module 23 after the high-voltage module 12 has been fastened to the high-voltage mating module 22.

As shown in Figures 1 to 13, in the illustrated embodiment, the low-voltage mating module 23 includes a fixed shell 230, an insulation retaining body 233, and a low-voltage mating terminal 231. The fixed shell 230 is integrally formed with the mating shell 21. However, the present invention is not limited to the illustrated embodiment, for example, the fixed shell 230 may be a separate component and fixed to the outside of the mating shell 21. The insulation retaining body 233 is fixedly installed in the fixed shell 230. The low-voltage mating terminal 231 is fixedly installed in the insulation retaining body 233. The low-voltage mating terminal 231 is used to mate with the low-voltage terminal 131 of the low-voltage module 13, to electrically connect the low-voltage module 13 and the low-voltage mating module 23.

As shown in Figures 1 to 13, in the illustrated embodiment, a threaded hole 232 is formed in the fixed shell 230 of the low-voltage mating module 23, which is used for threaded connection with the connecting bolt 132 of the low-voltage module 13.

As shown in Figures 1 to 13, in the illustrated embodiment, a pair of insertion holes 230c are formed in the fixed shell 230 of the low-voltage mating module 23, and the pair of cylindrical parts 130c on the movable shell 130 of the low-voltage module 13 are suitable for being respectively inserted into the pair of insertion holes 230c for positioning the movable shell 130 onto the fixed shell 230.

As shown in Figures 1 to 13, in the illustrated embodiment, the threaded hole 232 in the fixed shell 230 is located between the pair of insertion holes 230c. The insulation retaining body 233 is inserted into the insertion hole 230c of the fixed shell 230. The insulation retaining body 233 and the low-voltage mating terminal 231 are adapted to be inserted into one cylindrical part 130c of the movable shell 130 to mate with the low-voltage terminal 131 in the one cylindrical part 130c.

As shown in Figures 1 to 13, in the illustrated embodiment, the low-voltage mating module 23 also includes a sealing ring 235. The sealing ring 235 is fitted onto the insulation retaining body 233 and is suitable for being radially compressed between the insulation retaining body 233 and the inner wall of one cylindrical part 130c of the movable shell 130 to achieve sealing between the two.

As shown in Figures 1 to 13, in the illustrated embodiment, the low-voltage mating module 23 further includes a low-voltage cable 234, which is connected to the low-voltage mating terminal 231 and led out from the fixed shell 230 for electrical connection to a low-voltage detection circuit (not shown). This low-voltage detection circuit is used to detect the electrical connection status between the low-voltage terminal 131 and the low-voltage mating terminal 231. When the low voltage detection circuit detects that the low voltage terminal 131 and the low voltage mating terminal 231 are electrically connected to each other, the power control device (not shown) controls the power supply to supply power to the high voltage module and the high voltage mating module, otherwise it will not supply power to the high voltage module and the high voltage mating module.

As shown in Figures 1 to 13, in the illustrated embodiment, the low-voltage mating module 23 includes two low-voltage mating terminals 231 and two low-voltage cables 234. One ends of two low-voltage cables 234 are connected to two low-voltage mating terminals 231, respectively. The low voltage terminal 131 of the low-voltage module 13 includes two pins 131a, which are suitable for respectively plugging into two low voltage mating terminals 231 to electrically connect the two low voltage mating terminals 231. In the illustrated embodiment, when two low-voltage mating terminals 231 are bridged together by the low-voltage terminal 131, the low-voltage detection circuit sends a control instruction to the power control device to supply power to the high-voltage module and the high-voltage mating module.

As shown in Figures 1 to 13, in the illustrated embodiment, the mating housing 21 includes a flange 210 located outside it. The flange 210 is used for installation onto an installation panel (not shown), and the fixed shell 230 of the low-voltage mating module 23 is integrally formed on the flange 210 of the mating housing 21. However, the present invention is not limited to this, and the fixed shell 230 may be a separate component and fixed to the flange 210.

As shown in Figures 1 to 13, in the illustrated embodiment, the high-voltage mating module 22 includes a high-voltage mating terminal 221. A threaded connection hole 22a is formed in the high-voltage mating terminal 221, and the high-voltage fastener 123 passes through one end of the high-voltage cable 121 and the high-voltage terminal 122 and is threaded into the threaded connection hole 22a of the high-voltage mating terminal 221 to fasten the high-voltage terminal 122 and the high-voltage mating terminal 221 together.

However, please note that the present invention is not limited to the illustrated embodiment. For example, in another exemplary embodiment of the present invention, the high-voltage mating module 22 includes a high-voltage mating terminal 221 and a nut (not shown) fixed to the high-voltage mating terminal 221. This nut can be riveted, crimped, or welded to the high-voltage mating terminal 221. The high-voltage fastener 123 passes through one end of the high-voltage cable 121, the high-voltage terminal 122, and the high-voltage mating terminal 221, and is threaded with the nut to fasten the high-voltage terminal 122 and the high-voltage mating terminal 221 together.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A connector, comprising:
a housing (11) which is suitable for mating with a mating housing (21) of a mating connector (2);
a high-voltage module (12) which is provided in the housing (11) and is suitable for being fastened to a high-voltage mating module (22) of the mating connector (2) to be electrically connected with the high-voltage mating module (22); and
a low-voltage module (13) which is movably installed outside the housing (11), for electrical connection to a low-voltage mating module (23) of the mating connector (2),
wherein the low-voltage module (13) can be moved between a pre installation position separated from the low-voltage mating module (23) and a final installation position electrically connected to the low-voltage mating module (23),
wherein the low-voltage module (13) is moved separately to the final installation position electrically connected to the low-voltage mating module (23) only after the high-voltage module (12) has been fastened to the high-voltage mating module (22).

2. The connector according to claim 1,
wherein the low-voltage module (13) comprises:
a movable shell (130) which is movably installed outside the housing (11) and can be moved between the pre installation position and the final installation position; and
a low-voltage terminal (131) which is fixed to the movable shell (130) and is suitable for mating with a low-voltage mating terminal (231) of the low-voltage mating module (23),
wherein when the high-voltage module (12) has been fastened to the high-voltage mating module (22) and the movable shell (130) has been moved to the final installation position, the low-voltage terminal (131) is mated with the low-voltage mating terminal (231) to electrically connect the low-voltage module (13) and the low-voltage mating module (23).

3. The connector according to claim 2,
wherein the low-voltage module (13) further comprises:
a connecting bolt (132) which is rotatably connected to the movable shell (130) and can be rotated relative to the movable shell (130),
wherein the connecting bolt (132) is used for threaded connection with a threaded hole (232) in a fixed shell (230) of the low-voltage mating module (23), to drive the movable shell (130) to move from the pre installation position to the final installation position and lock the movable shell (130) in the final installation position.

4. The connector according to claim 3,
wherein the connecting bolt (132) has a flange part (132a) located at its head, and a slot (130a) is formed in the movable shell (130), the flange part (132a) of the connecting bolt (132) is rotatably engaged in the slot (130a), so that the connecting bolt (132) can be rotated around its axis and cannot be separated from the movable shell (130) in its axial direction;
wherein an operating hole (130d) communicated with the slot (130a) is formed in the movable shell (130), allowing an operating tool to be inserted into the slot (130a) through the operating hole (130d) and engaged with the head of the connecting bolt (132).

5. The connector according to claim 4,
wherein the movable shell (130) comprises a pair of cylindrical parts (130c) adapted to be respectively inserted into a pair of insertion holes (230c) in the fixed shell (230) for positioning the movable shell (130) onto the fixed shell (230).

6. The connector according to claim 5,
wherein a guide slot (130b) is defined between the pair of cylindrical parts (1302), and a guide wall (110) is formed on the outside of the housing (11), the guide wall (110) is mated with the guide slot (130b) to guide the movable shell (130) to move along the axial direction of the connecting bolt (132);
wherein a through hole (101) is formed in the guide wall (110) to allow the connecting bolt (132) to pass through, and the connecting bolt (132) passes through the through hole (101) in the guide wall (110).

7. The connector according to claim 5,
wherein the low-voltage terminal (131) is provided in one cylindrical part (130c) of the movable shell (130), suitable for mating with the low-voltage mating terminal (231) inserted into the one cylindrical part (130c).

8. The connector according to any one of claims 3-7,
wherein the high-voltage module (12) comprises:
a high-voltage cable (121), one end of which extends into the housing (11);
a high-voltage terminal (122) which is provided in the housing (11) and electrically connected to one end of the high-voltage cable (121); and
a high-voltage fastener (123) which is used to fasten the high-voltage terminal (122) to a high-voltage mating terminal (221) of the mating connector (2), to electrically connect the high-voltage module (12) and the high-voltage mating module (22).

9. The connector according to claim 8,
wherein the high-voltage fastener (123) is suitable for being threaded to the high-voltage mating terminal (221) or a nut inside the mating connector (2) to fasten the high-voltage terminal (122) and the high-voltage mating terminal (221) together;
wherein the connecting bolt (132) is threaded to the fixed shell (230) of the low-voltage mating module (23) after the high-voltage fastener (123) has been threaded to the high-voltage mating terminal (221) or the nut inside the mating connector (2).

10. A connector assembly, comprising:
the connector (1) according to any one of claims 1-9; and
a mating connector (2) which is mated with the connector (1),
wherein the mating connector (2) comprises:
a mating housing (21) which is mated with the housing (11) of the connector (1);
a high-voltage mating module (22) which is provided in the mating housing (21) for electrically connecting to the high-voltage module (12) of the connector (1); and
a low-voltage mating module (23) which is fixedly provided outside the mating housing (21) for electrical connection to the low-voltage module (13) of the connector (1),
wherein the low-voltage module (13) of the connector (1) is separately moved to the final installation position electrically connected to the low-voltage mating module (23) after the high-voltage module (12) has been fastened to the high-voltage mating module (22).

11. The connector assembly according to claim 10,
wherein the low-voltage mating module (23) comprises:
a fixed shell (230) that is integrally formed with the mating shell (21) or fixed to the outside of the mating shell (21);
an insulation retaining body (233) which is fixedly installed in the fixed shell (230); and
a low-voltage mating terminal (231) is fixedly provided in the insulation retaining body (233),
wherein the low-voltage mating terminal (231) is used to mate with the low-voltage terminal (131) of the low-voltage module (13) to electrically connect the low-voltage module (13) and the low-voltage mating module (23).

12. The connector assembly according to claim 11,
wherein a threaded hole (232) is formed in the fixed shell (230) of the low-voltage mating module (23) and is used for threaded connection with the connecting bolt (132) of the low-voltage module (13);
wherein a pair of insertion holes (230c) are formed in the fixed shell (230) of the low-voltage mating module (23), and a pair of cylindrical parts (130c) on the movable shell (130) of the low-voltage module (13) are adapted to be respectively inserted into the pair of insertion holes (230c) for positioning the movable shell (130) onto the fixed shell (230).

13. The connector assembly according to claim 12,
wherein the threaded hole (232) in the fixed shell (230) is located between the pair of insertion holes (230c), and the insulation retaining body (233) is inserted into one insertion hole (230c) of the fixed shell (230);
wherein the insulation retaining body (233) and the low-voltage mating terminal (231) are adapted to be inserted into one cylindrical part (130c) of the movable shell (130) to mate with the low-voltage terminal (131) in the one cylindrical part (130c).

14. The connector assembly according to claim 13,
wherein the low-voltage mating module (23) further comprises:
a sealing ring (235) which is fitted onto the insulation retaining body (233) and adapted to be radially compressed between the insulation retaining body (233) and the inner wall of a cylindrical part (130c) of the movable shell (130) to achieve sealing between the two.

15. The connector assembly according to claim 11,
wherein the low-voltage mating module (23) comprises two low-voltage mating terminals (231) and two low-voltage cables (234), with one ends of the two low-voltage cables (234) connected to the two low-voltage mating terminals (231) respectively;
wherein the low-voltage terminal (131) of the low-voltage module (13) comprises two pins (131a), which are adapted to be respectively plugged into the two low-voltage mating terminals (231) to electrically connect the two low-voltage mating terminals (231).

16. The connector assembly according to claim 10,
wherein the mating housing (21) comprises a flange (210) located on its exterior, which is used for installation onto an installation panel, the fixed shell (230) of the low-voltage mating module (23) is integrally formed on or fixed to the flange (210).

17. The connector assembly according to any one of claims 10-15,
wherein the high-voltage mating module (22) comprises a high-voltage mating terminal (221), in which a threaded connection hole (22a) is formed; the high-voltage fastener (123) passes through one end of the high-voltage cable (121) and the high-voltage terminal (122) and is threaded into the threaded connection hole (22a) of the high-voltage mating terminal (221) to fasten the high-voltage terminal (122) and the high-voltage mating terminal (221) together.

18. The connector assembly according to any one of claims 10-15,
wherein the high-voltage mating module (22) comprises a high-voltage mating terminal (221) and a nut fixed to the high-voltage mating terminal (221); the high-voltage fastener (123) passes through one end of the high-voltage cable (121), the high-voltage terminal (122), and the high-voltage mating terminal (221) and is threaded with the nut to fasten the high-voltage terminal (122) and the high-voltage mating terminal (221) together.
